(19) Europäisches Patentamt
European Patent Office
Office européen des brevets

(11) EP 2 006 836 A2

(12) EUROPEAN PATENT APPLICATION
published in accordance with Art. 153(4) EPC

(43) Date of publication:
24.12.2008 Bulletin 2008/52

(51) Int Cl.:
*G10L 17/00* (2006.01)    *G10L 15/06* (2006.01)

(21) Application number: 07739119.1

(22) Date of filing: 20.03.2007

(86) International application number:
PCT/JP2007/055676

(87) International publication number:
WO 2007/111197 (04.10.2007 Gazette 2007/40)

(84) Designated Contracting States:
DE FR GB

(30) Priority: 24.03.2006 JP 2006084276

(71) Applicant: Pioneer Corporation
Tokyo 153-8654 (JP)

(72) Inventors:
• TOYAMA, Soichi
  Tsurugashima-shi, Saitama 3502288 (JP)

• FUJITA, Ikuo,
  c/o PIONEER CORP., Kawagoe Plant
  Kawagoe-shi, Saitama 350-8555 (JP)
• SHIODA, Takehiko
  Tsurugashima-shi, Saitama 3502288 (JP)

(74) Representative: Viering, Jentschura & Partner
Grillparzerstrasse 14
81675 München (DE)

(54) SPEAKER MODEL REGISTRATION DEVICE AND METHOD IN SPEAKER RECOGNITION SYSTEM AND COMPUTER PROGRAM

(57) A speaker model registration device (10) in a speaker recognition system (1) includes: acquisition means (13) for acquiring n utterances (n is an integer not smaller than 2); similarity calculation means (15) for calculating a similarity indicating similarity between the n utterances acquired; and verification means (16) for verifying whether an inappropriate utterance having similarity not reaching a predetermined reference exists. The speaker model registration device (20) further includes: speaker model calculation means for calculating a speaker model according to the n utterances not including any inappropriate utterance if no inappropriate utterance exists as a result of the verification; and registration means (40) for registering the calculated speaker model as a speaker model for speaker recognition.

[FIG. 1]

**Description**

Technical Field

The present invention relates to a speaker recognition system, which is provided for various computer equipment and various electronic electric equipment, such as a car navigation apparatus, a net banking apparatus, an auto-lock apparatus, and a computer's recognizing apparatus, and which performs speaker recognition on the basis of an utterance of a speaker who is a user of the system. In particular, the present invention relates to a speaker model registering apparatus and method in the system, and a computer program which makes a computer function as such a speaker model registering apparatus.

Background Art

This type of speaker model registering apparatus has three types of systems: of a text fixed type or text dependence type in which an uttered text used for the recognition is registered in advance; of a text independent type or non-text-dependence type in which the above registration is not required and recognition is performed on an arbitrary text, and of a text specification type in which the text is specified for the recognition in the registration or in each recognition. Of these, the text dependence type reaches practical use, and various suggestions have been made (refer to a patent document 1).

Patent document 1: Japanese Patent Application Laid Open NO. 2004-294755

Disclosure of Invention

Subject to be Solved by the Invention

However, for example, according to the technology disclosed in the patent document 1 described above, the text related to the utterance for registration has to be inputted with a keyboard or the like in the registration, so it is hard to say it is convenient. Moreover, in each registration, it is required to check utterance information to be newly registered, against some check information, to thereby selectively perform whether to make an utterance again or register the utterance, in accordance with the extent of similarity between the utterance information and the check information. Thus, there is such a technical problem that the processing is complicated, to thereby complicate a user's operation as well.

In addition, in any of the conventional technologies, an external noise is mixed in the utterance at the stage of registration, or a registered utterance model becomes unreliable when the speaker makes the utterance without repeatability despite the user's intent (e.g. a voice flips into falsetto or quavers). Thus, a final speaker recognition accuracy falls to the extent that it cannot be ignored. Alternatively, in order to avoid this, a registration operation is required to be performed many times, which causes such a problem that the registration itself becomes hard in practice.

In view of the aforementioned problems, it is therefore an object of the present invention to provide a speaker model registering apparatus and method in a speaker recognition system in which processing on a computer and a user's operation are relatively simple, in registering a text related to speaker recognition, and the speaker recognition system provided with such a speaker model registering apparatus, and a computer program which makes a computer function as such a speaker model registering apparatus.

Means for Solving the Subject

(Speaker Model Registering Apparatus in Speaker Recognition System)

The above object of the present invention can be achieved by a speaker model registering apparatus for registering a speaker model for speaker recognition in a speaker recognition system, the speaker model registering apparatus provided with: an obtaining device for obtaining n utterances (wherein n is an integral of 2 or more); a similarity calculating device for calculating similarity which indicates how similar the obtained n utterances are each other; a verifying device for verifying whether or not there is an unsuitable utterance in which the similarity falls short of predetermined standards, of the n utterances; a speaker model calculating device for calculating a speaker model on the basis of the n utterances which does not include the unsuitable utterance if there is no unsuitable utterance as a result of the verification; and a registering device for registering the calculated speaker model as the speaker model for speaker recognition.

According to the speaker model registering apparatus of the present invention, the registration is performed in the following manner at a stage of registering the speaker model in the speaker recognition system.

That is, in its operation, firstly, the utterances are obtained by the obtaining device equipped with a microphone, a processor, a memory and the like; for example, audio extraction of extracting an audio portion related to a speaker of an audio signal from the microphone and further calculation of a feature quantity from them are performed. Here, in particular, the n utterances are obtained by performing such utterance obtainment n times, which is typically performed by letting the speaker utter the same text repeatedly. Here, the "utterance" indicates audio or audio information which is used at any of the stages throughout the whole process of speaker recognition and which is related to the text uttered by the speaker as being a user.

Then, by the similarity calculating device equipped with a processor, a memory, and the like, the similarity among the n utterances obtained in this manner is calculated. Typically, in each of the n utterances, the similarity between one utterance and the other n-1 utterances is calculated. Incidentally, it is only necessary that the "similarly" in the present invention directly or indirectly indicates the extent of similarity, and so to speak, similarity in a broad sense. Thus, not only so-called "similarity" or "similarity in a narrow sense" but also so-called "likelihood" or "distance scale" are one example of the "similarity" in the present invention.

Then, by the verifying device equipped with a processor, a memory, and the like, it is verified whether or not there is the unsuitable utterance in which the similarity obtained by the calculation falls short of the predetermined standards, of the n utterances.

As a result of the verification, if there is no unsuitable utterance, the speaker model is calculated by the speaker model calculating device equipped with a processor, a memory, and the like, on the basis of the n utterances which do not include the unsuitable utterance. That is, after the n utterances which do not include the unsuitable utterance (i.e. which are similar each other under the predetermined standards) are strictly selected as the suitable utterance for registration, the speaker model is calculated on the basis of the n utterances for registration.

Then, by the registering device equipped with a processor, a memory, a database, and the like, the speaker model calculated in this manner is registered as the speaker model for speaker recognition. In other words, the speaker model excluding the unsuitable utterance with the low similarity, i.e. the speaker model based on the n suitable utterances, is registered as the speaker model for speaker recognition.

Consequently, according to the present invention, it is possible to register the speaker model for speaker recognition which is based only on the utterances in which the each other's similarity reaches the predetermined standards and which is highly reliable, extremely easily. At this time, since the each other's similarity of the plurality of utterances is considered, it is unnecessary to input a keyword using a keyboard, and a trouble of keyboard input is eliminated, so that it is extremely useful in practice.

In one aspect of the speaker model registering apparatus of the present invention, it is further provided with a controlling device for controlling the obtaining device, the similarity calculating device, and the verifying device to repeat the obtainment of a new utterance as an alternative utterance to the unsuitable utterance, the calculation of the similarity among n utterances including the obtained new utterance, and the verification until the unsuitable utterance disappears, if there is the unsuitable utterance as a result of the verification.

According to this aspect, if there is the unsuitable utterance, under the control of the controlling device equipped with a processor, a memory, and the like, for example, the obtainment of the new utterance as the alternative utterance to the unsuitable utterance, the calculation of the similarity among n utterances including the obtained new utterance, and the verification are repeated, and in the end the unsuitable utterance disappears. Therefore, as often seen in practice, even if the obtainment of the utterances does not go well in all times due to a noise mixed in the utterance by the speaker or a failure of the utterance itself by the speaker, it is possible to calculate the extremely accurate speaker model, with the unsuitable utterance being certainly eliminated by performing again the simple repeat on the obtainment of the utterances and the calculation operation or the like. In addition, in the obtainment of the utterances, after obtaining all the utterances for registration, the similarity between the utterances is verified. Thus, even if the similarity does not satisfy the predetermined standards because of a mixed noise in the first utterance, this utterance can be automatically detected on the basis of the similarity and can be pinpoint-corrected, so that it is extremely useful in practice.

In an aspect in which the repeated verification is performed, the verifying device may change the predetermined standards to a side where the unsuitable utterance hardly appears, every time the verification is repeated in accordance with appearance of the unsuitable utterance.

According to this aspect, since the predetermined standards are changed to the side where the unsuitable utterance hardly appears, i.e. the side where the standards of being unsuitable are eased, the repeat ends after being performed a certain degree of times. By this, it is possible to avoid such a situation that the series of operations associated with the registration of the speaker model goes on, and it is possible to register the speaker model excellent in specific validity, extremely efficiently.

Alternatively, in an aspect in which the repeated verification is performed, the controlling device may treat all the n utterances, which are targets of the verification at a current time point, as the unsuitable utterance, regardless of the similarity, if the number of appearances of the unsuitable utterance exceeds a predetermined threshold value while the verification is repeated.

According to this aspect, if the number of appearances of the unsuitable utterance exceeds the predetermined threshold value, all the n utterances, which are the targets of the verification at the current point, are treated as the unsuitable utterance, so after all, processing is performed from the beginning of the obtainment of all the utterances. Therefore, even if some of the obtained utterances do not have high similarity for some reasons, resetting and starting over again from the beginning possibly allow obtaining the utterances all of which have high similarity. By this, it is possible to avoid such a situation that the series of operations associated with the registration of the speaker model goes on, and it is possible to register the speaker model excellent in specific validity, extremely efficiently.

Alternatively, in an aspect in which the repeated verification is performed, the controlling device may treat all the n utterances, which are targets of the verification at a current time point, as the unsuitable utterance, regardless of the similarity, if a ratio of appearances of the unsuitable utterance exceeds a predetermined threshold value.

According to this aspect, if the number of appearances of the unsuitable utterance exceeds the predetermined threshold value, all the n utterances, which are the targets of the verification at the current point, are treated as the unsuitable utterance, so after all, processing is performed from the obtainment of all the utterances. Therefore, even if some of the obtained utterances do not have high similarity for some reasons, resetting and starting over again from the beginning possibly allow obtaining the utterances all of which have high similarity. By this, it is possible to avoid such a situation that the series of operations associated with the registration of the speaker model goes on, and it is possible to register the speaker model excellent in specific validity, extremely efficiently.

In another aspect of the speaker model registering apparatus of the present invention, it is further provided with a requesting device for requesting the obtainment of the utterances by the obtaining device, if there is the unsuitable utterance as a result of the verification.

According to this aspect, if there is the unsuitable utterance as the result of the verification, by the requesting device equipped with a display apparatus, an audio output apparatus, a controller, or a processor, a memory, and the like, for example, the obtainment of the utterances by the obtaining device is requested. For example, the utterances are requested again to the speaker as being the user, through display output on a display screen and audio output in a sound field in front of the speaker model registering apparatus. Therefore, it is possible to certainly perform the simple repeat, to thereby perform the reliable registration of the speaker model.

(Speaker Recognition System)

The above object of the present invention can be also achieved by a speaker recognition system provided with: the speaker model registering apparatus describe above (including its various aspects); and a recognizing device for recognizing the utterances by an arbitrary speaker, on the basis of the registered speaker model.

According to the speaker recognition system of the present invention, since it is provided with the speaker model registering apparatus of the present invention describe above, it is possible to perform the speaker recognition which is extremely reliable, through the relatively simple process on the apparatus side and the relatively simple operation by the speaker as being the user.

(Speaker Model Registering Method)

The above object of the present invention can be also achieved by a speaker model registering method of registering a speaker model for speaker recognition in a speaker recognition system, the speaker model registering method provided with: an obtaining process of obtaining n utterances (wherein n is an integral of 2 or more); a similarity calculating process of calculating similarity which indicates how similar the obtained n utterances are each other; a verifying process of verifying whether or not there is an unsuitable utterance in which the similarity falls short of predetermined standards, of the n utterances; a speaker model calculating process of calculating a speaker model on the basis of the n utterances which does not include the unsuitable utterance if there is no unsuitable utterance as a result of the verification; and a registering process of registering the calculated speaker model as the speaker model for speaker recognition.

According to the speaker model registering method in the speaker recognition system, of the present invention, as in the speaker model registering apparatus of the present invention described above, even if the obtainment of the utterances does not go well in all times due to a noise mixed in the utterance by the speaker or a failure of the utterance itself by the speaker, it is possible to register the reliable speaker model by performing again the simple repeat on the obtainment of the utterances and the calculation operation or the like.

Incidentally, even the speaker model registering method can employ the same various aspects as those of the speaker model registering apparatus of the present invention described above.

(Computer Program)

The above object of the present invention can be also achieved by a computer program making a computer, which is provided for a speaker model registering apparatus for registering a speaker model for speaker recognition in a speaker recognition system, as: an obtaining device for obtaining n utterances (wherein n is an integral of 2 or more); a similarity calculating device for calculating similarity which indicates how similar the obtained n utterances are each other; a verifying device for verifying whether or not there is an unsuitable utterance in which the similarity falls short of predetermined standards, of the n utterances; a speaker model calculating device for calculating a speaker model on the basis of the n utterances which does not include the unsuitable utterance if there is no unsuitable utterance as a result of the verification; and a registering device for registering the calculated speaker model as the speaker model for speaker recognition.

According to the computer program of the present invention, the aforementioned speaker model registering apparatus of the present invention can be embodied relatively readily, by loading the computer program from a recording medium for storing the computer program, such as a CD-ROM (Compact Disc - Read Only Memory), a DVD-ROM (DVD Read Only Memory) or the like, into the computer, or by downloading the computer program into the computer via a communication device. By this, as in the speaker model registering apparatus of the present invention described above, even if the obtainment of the utterances does not go well in all times due to a noise mixed in the utterance by the speaker or a failure of the utterance itself by the speaker, it is possible to register the reliable speaker model by performing again the simple repeat on the obtainment of the utterances and the calculation operation or the like.

Incidentally, even the computer program can employ the same various aspects as those of the speaker model registering apparatus of the present invention described above.

The above object of the present invention can be also achieved by a computer program product in a computer-readable medium for tangibly embodying a program of instructions executable by a computer provided in a speaker model registering apparatus for registering a speaker model for speaker recognition in a speaker recognition system, the computer program product making the computer function as: an obtaining device for obtaining n utterances (wherein n is an integral of 2 or more); a similarity calculating device for calculating similarity which indicates how similar the obtained n utterances are each other; a verifying device for verifying whether or not there is an unsuitable utterance in which the similarity falls short of predetermined standards, of the n utterances; a speaker model calculating device for calculating a speaker model on the basis of the n utterances which does not include the unsuitable utterance if there is no unsuitable utterance as a result of the verification; and a registering device for registering the calculated speaker model as the speaker model for speaker recognition.

According to the computer program product of the present invention, the speaker model registering apparatus of the present invention described above can be embodied relatively readily, by loading the computer program product from a recording medium for storing the computer program product, such as a ROM (Read Only Memory), a CD-ROM, a DVD-ROM, a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the speaker model registering apparatus of the present invention described above.

As explained above in details, according to the speaker model registering apparatus of the present invention, it is provided with the similarity calculating device, the verifying device, and the speaker model calculating device. According to the speaker model registering method of the present invention, it is provided with the similarity calculating process, the verifying process, and the speaker model calculating device. Thus, even if the obtainment of the utterances does not go well in all times, it is possible to register the reliable speaker model. According to the speaker recognition system of the present invention, it is provided with the speaker model registering apparatus of the present invention. Thus, it is possible to perform the speaker recognition which is extremely reliable, through the relatively simple process on the apparatus side and the relatively simple operation by the speaker as being the user. Moreover, according to the computer program of the present invention, it makes a computer function as the similarity calculating device, the verifying device, and the speaker model calculating device. Thus, the speaker model registering apparatus of the present invention can be established, relatively easily.

These effects and other advantages of the present invention will become more apparent from the embodiments explained below.

Brief Description of Drawings

[FIG. 1] FIG. 1 is a block diagram conceptually showing the basic structure and operation of a speaker model registering apparatus in a speaker registration system, in a first embodiment of the present invention.
[FIG. 2] FIG. 2 is a block diagram conceptually showing the basic structure and operation of a speaker model registering apparatus in a speaker registration system, in a second embodiment.
[FIG. 3] FIG. 3 is a comparative view showing a result of calculation of similarity between utterances in the second embodiment.

[FIG. 4] FIG. 4 is a comparative view showing that the similarity between utterances is verified in the second embodiment.

[FIG. 5] FIG. 5 is a flowchart showing the operation processes of a speaker model registering apparatus in a speaker registration system, in a third embodiment

[FIG. 6] FIG. 6 is a flowchart showing the operation processes of a speaker model registering apparatus in a speaker registration system, in a fourth embodiment

Description of Reference Codes

1       speaker recognition system
10      speaker model registering apparatus
13      obtaining device
15      similarity calculation device
16      verification device
100     control device
20      speaker model calculation device
30      check device
40      registration device
45      speaker model database
132     microphone
142     audio portion extraction device
201     feature quantity calculation device
30      authentication device
50      requesting device
52      display screen

Best Mode for Carrying Out the Invention

Hereinafter, the best mode for carrying out the present invention will be explained in each embodiment in order with reference to the drawings.

(1) First Embodiment

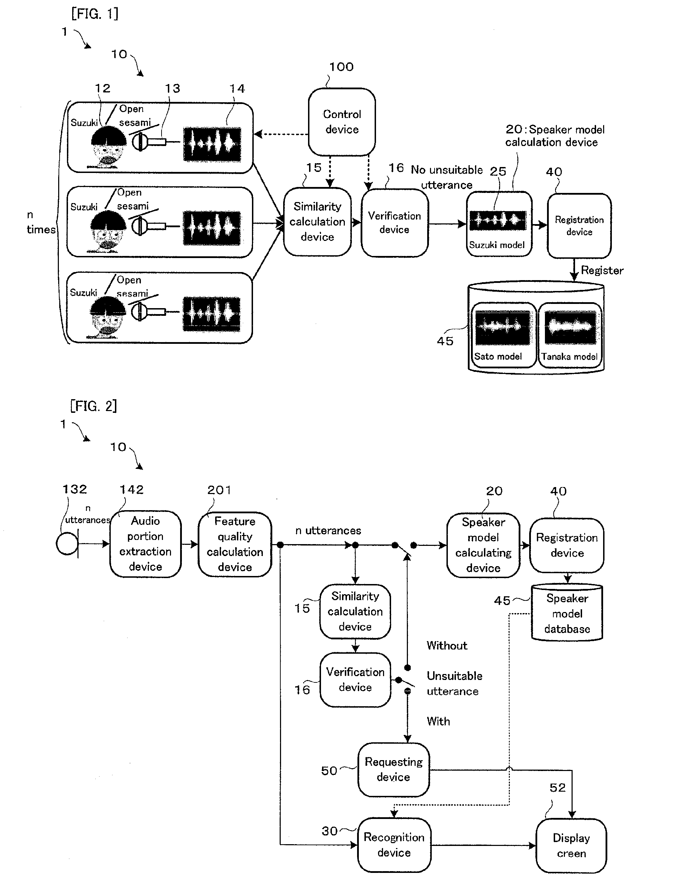

With reference to FIG. 1, an explanation will be given on the basic structure and operation of a speaker model registering apparatus in a speaker registration system, in a first embodiment. FIG. 1 is a block diagram conceptually showing the basic structure and operation of the speaker model registering apparatus in the speaker registration system, in the first embodiment of the present invention.

In FIG. 1, a speaker model registering apparatus 10 in a speaker registration system 1 in this embodiment is provided with: an obtaining device 13 as one example of the "obtaining device" of the present invention; a similarity calculation device 15 as one example of the "similarity calculating device" of the present invention; a verification device 16 as one example of the "verifying device" of the present invention; a control device 100 as one example of the "controlling device" of the present invention; a speaker model calculation device 20 as one example of the "speaker model calculating device" of the present invention; a check device 30 as one example of the "recognizing device" of the present invention; a registration device 40 as one example of the "registering device" of the present invention; and a requesting device 50 as one example of the "requesting device" of the present invention.

The obtaining device 13 includes audio input equipment, such as a microphone. The obtaining device 13 obtains utterances (actually, waveform data 14 of the utterances) of a keyword (e.g. "open sesame"), arbitrarily set by a user 12 (e.g. Mr. Suzuki) who is a speaker, n times when the speaker's registration is performed, and stores them into a memory or the like. Here, n is the number of utterances required for calculating and registering the number of utterances for registration, i.e. a speaker model 25, and the number of utterances in which the accuracy of the speaker model 25 is ensured enough for practical use may be set in advance by experiments or simulations. For example, in FIG. 1, it is tried to calculate the speaker model 25 (e.g. Suzuki model) on the basis of n=3, namely, three times of utterances.

The similarity calculation device 15 is logically established in accordance with a program, within a computer provided with a processor, a memory, and the like. The similarity calculation device 15 calculates similarity among n utterances obtained by the obtaining device 13.

The verification device 16 is logically established in accordance with a program, within a computer provided with a processor, a memory, and the like. The verification device 16 verifies whether or not there is an unsuitable utterance which falls short of predetermined standards, of the similarity among n utterances obtained by the calculation.

The control device 100 is logically established in accordance with a program, within a computer provided with a processor, a memory, and the like. The control device 100 controls the obtaining device 13, the similarity calculation device 15, and the verification device 16 to discard the unsuitable utterance if it is verified on the verification device 16 that there is the unsuitable utterance and to repeat the obtainment of a new utterance as an alternative utterance to the unsuitable utterance, the calculation of the similarity among n utterances including the obtained new utterance, and the verification until it is verified there is no unsuitable utterance.

The speaker model calculation device 20 is logically established in accordance with a program, within a computer provided with a processor, a memory, and the like. The speaker model calculation device 20 calculates the speaker model 25 which captures characteristics when the user 12 (Mr. Suzuki) utters the keyword, on the basis of the n utterances which does not include the unsuitable utterance, i.e. in which all the similarities satisfy the predetermined standards.

The registration device 40 is logically established in accordance with a program, within a computer provided with a processor, a memory, and the like. The registration device 40 formally registers the speaker model 25 satisfying the predetermined standards as a result of the verification by the verification device 30, of the speaker model 25 calculated by the speaker model calculation device 20, as the speaker model 25 for speaker recognition, into a speaker model database 45 established within a large-scale memory apparatus, such as a hard disk apparatus provided for a computer and an optical disc apparatus.

As described above, according to the speaker model registering apparatus 10 constructed as shown in FIG. 1, it is provided particularly with the similarity calculation device 15, the verification device 16, the control device 100, and the speaker model calculation device 20. Thus, under the control of the control device 100, the speaker model 25 for speaker recognition, which is calculated by the similarity calculation device 15, which is verified by the verification device 16, and which is relatively reliable, is calculated by the speaker model calculation device 20 and can be registered. At this time, it is based on an utterance-based operation, so that a trouble of keyboard input can be eliminated. In addition, even if the obtainment of the utterances repeatedly performed does not go well in all times, the registration is certainly performed by simply repeating the obtainment of the utterances, the calculation operation, and the like. In the obtainment of the utterances, after obtaining all the utterances for registration, the similarity between the utterances is verified. Thus, even if the similarity does not satisfy the predetermined standards because of a mixed noise in the first utterance, this utterance can be automatically detected on the basis of the similarity and can be pinpoint-corrected, so that it is extremely useful in practice.

(2) Second Embodiment

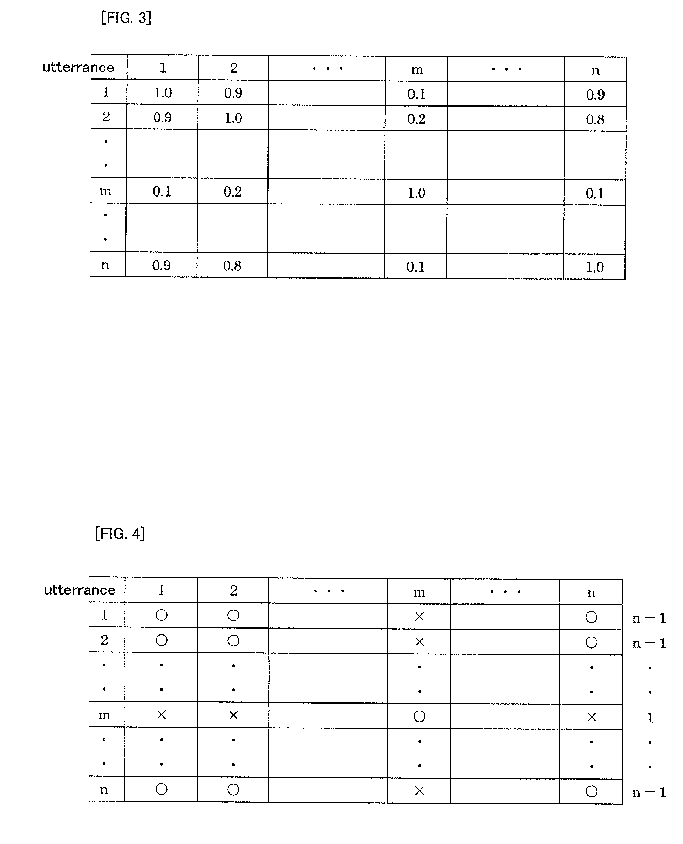

With reference to FIG. 2, FIG. 3, and FIG. 4, an explanation will be given on the basic structure and operation of a speaker model registering apparatus in a speaker registration system, in a second embodiment. FIG. 2 is a block diagram conceptually showing the basic structure and operation of the speaker model registering apparatus in the speaker registration system, in the second embodiment. Incidentally, in FIG. 2 and FIG. 3, the same structure as that of the aforementioned drawing carries the same numerical reference, and the explanation thereof will be omitted as occasion demands.

In FIG. 2, a speaker model registering apparatus 10 in a speaker registration system 1 in this embodiment is provided with: a microphone 132; an audio portion extraction device 142; a feature quantity calculation device 201; a similarity calculation device 15; a verification device 16; a speaker model calculation device 202; a registering device 40; a requesting device 50; a display screen 52; and a recognition device 30. The speaker model registering apparatus 10 preferably registers a speaker model for speaker recognition which is relatively reliable.

The microphone 132 is equipment for converting utterances into respective electric signals and inputting them into the speaker recognition system 1 when a user 2 utters the keyword n times.

The audio portion extraction device 142 is logically established in accordance with a program, within a computer provided with a processor, a memory, and the like. The audio portion extraction device 142 is an arithmetic apparatus for cutting out an utterance audio portion in which the keyword is uttered, from the converted electric signals of the utterances, by a general audio section detecting method or the like which uses a difference in power between a background noise and an audio utterance section.

The feature quantity calculation device 201 is logically established in accordance with a program, within a computer provided with a processor, a memory, and the like. The feature quantity calculation device 201 converts the inputted utterance audio portion into a feature quantity. The feature quantity is an arithmetic apparatus converted by MFCC (Mel Frequency Cepstrum Coefficient), LPC (Linear Predictive Coding) cepstrum, or the like. Then, the converted feature quantity is transmitted to the similarity calculation device 15 in the speaker registration and to the recognition device 30 in the speaker recognition.

The similarity calculation device 15 is logically established in accordance with a program, within a computer provided with a processor, a memory, and the like. The similarity calculation device 15 calculates the similarity among n utterances transmitted.

The verification device 16 is logically established in accordance with a program, within a computer provided with a processor, a memory, and the like. The verification device 16 verifies whether or not there is an unsuitable utterance which falls short of predetermined standards, of the similarity among n utterances obtained by the calculation.

Now, the calculation of similarity and the verification are explained, using FIG. 3 and FIG. 4. FIG. 3 is a comparative view showing a result of calculation of similarity between utterances in the second embodiment. FIG. 4 is a comparative view showing that the similarity between utterances is verified in the second embodiment.

In FIG. 3 and FIG. 4, a row number and a column number both indicate the number of n utterances, or a number allocated to each utterance.

In FIG. 3, a numerical value in a cell formed by the intersection of the row and the column indicates the similarity calculated by the similarity calculation device 15 between an utterance with the row number (utterance i) and an utterance with the column number (utterance j) related to the cell (wherein i and j are both integers of 0 or more but not exceeding n). The similarity is expressed by a real number of 0 or more but not exceeding 1, for example, wherein 0 indicates the least similarity and 1 indicates the most similarity (i.e. being the same). In calculating the similarity between the utterance i and the utterance j, for example, it is better to use the following equation 1 because the process is relatively simple.

$$\text{Similarity between utterance i and utterance j}$$

$$= \min [\text{utterance length (frame length) of utterance i, utterance length (frame length) of utterance j]} / \max [\text{utterance length (frame length) of utterance i, utterance length (frame length) of utterance j}] \quad \ldots\ldots \quad (\text{Eq. 1})$$

In the above equation, the utterance length, i.e. how similar the lengths of the audio sections extracted are, as the similarity. As described above, only the similarity of one portion of the utterance data may be focused to calculate the similarity. Alternatively, the similarity of all the utterances may be calculated, such as a score when the utterance feature quantities of one utterance which has shorter utterance lengths, of the utterance i and the utterance j is set as a template, and the other utterance is DP-matched. As the similarity, in addition to this, various calculation methods may be used, and their plurality of types of similarities may be simultaneously obtained and used.

Then, FIG. 4 shows that the verification device 16 verifies whether the utterance is suitable or unsuitable, on the basis of the similarity shown in FIG. 3. Specifically, the verification device 16 judges whether or not the similarity calculated by the similarity calculation device 15 reaches the predetermined standards, in other words, whether or not the utterance is the unsuitable utterance. For example, in FIG. 4, with a threshold value of the similarity of 0.7, if the similarity in each cell in FIG. 3 is greater than or equal to 0.7, it is rewritten as a mark of ○ (circle), and if the similarity is less than or equal to 0.7, it is rewritten as a mark of × (X). Then, the number of ○ (circles) is counted in each row, and it is verified whether or not there is a row with a count value lower than a predetermined threshold value k. If there is a row with a count value lower than the predetermined threshold value k, the utterance corresponding to the row is discarded, and other utterances by that much are requested to a user. As a result, if the number of ○ (circles) in all rows is greater than the predetermined threshold value k, i.e. if the similarity between one utterance and the other utterances of all the utterances is relatively high, the feature quantity is transmitted to the speaker model calculation device 202 in order to calculate the speaker model using those utterances.

Incidentally, as the similarity, likelihood or a reciprocal of distance scale is used. If the reciprocal of distance scale is used as the similarity, it is necessary to change the controlling method, as occasion demands, because of the reciprocal. Specifically, an inequality sign is reversed in the comparison with the predetermined threshold value on the verification / registering device 41.

Back in FIG. 2 again, the speaker model calculation device 202 is an arithmetic apparatus for calculating and learning the speaker model with n times of feature quantities which are verified to reach the predetermined standards on the verification device 16. Here, the speaker model is expressed as a speaker template in various audio recognition algorithms, such as speaker HMM (Hidden Markov Model) and DP (Dynamic Programming) matching.

The registering device 40 registers the verified speaker model into the speaker model database 45 as the speaker model for speaker recognition.

The display screen 52 is display equipment, such as a liquid crystal display, for displaying a verification result or a request message.

The requesting device 50 requests an utterance for registration to the user 12 again if it is verified on the verification device 16 that there is the unsuitable utterance. For example, the requesting device 50 displays a message for request on the display screen 52, such as "make an utterance again". Then, the process based on the aforementioned construction is performed until the requesting device 50 no longer requests it to the user 12, in other words, until the speaker model for speaker recognition is registered.

In addition, when the speaker recognition system 1 provided with the speaker model registering apparatus 10 described above performs the speaker recognition, the following recognition device may be further provided.

The recognition device 30 checks the utterance of an arbitrary speaker who requires recognition (the speaker herein, i.e. the user 12, is not limited to a registrant who registers the speaker model 25; for example, the speaker includes a third party who pretends to be Mr. Suzuki) against the registered speaker model 25, to thereby recognize whether or not the arbitrary speaker who requires recognition is the speaker of the registered speaker model 25. Specifically, as a result of the checking, if the similarity or the like satisfies the predetermined standards, it is recognized that the arbitrary speaker who requires recognition is the speaker of the registered speaker model 25, and if not, it is recognized that the arbitrary speaker is not the speaker. Then, the authentication result is displayed on the display screen 52.

As explained in details with reference to FIG. 2, FIG. 3, and FIG. 4, according to the speaker recognition system 1 in the embodiment, since it is provided with the speaker model registering apparatus 10 in the embodiment, it is possible to perform the speaker recognition which is extremely reliable, through the relatively simple process on the apparatus side and the relatively simple operation by the speaker as being the user.

(3) Third Embodiment

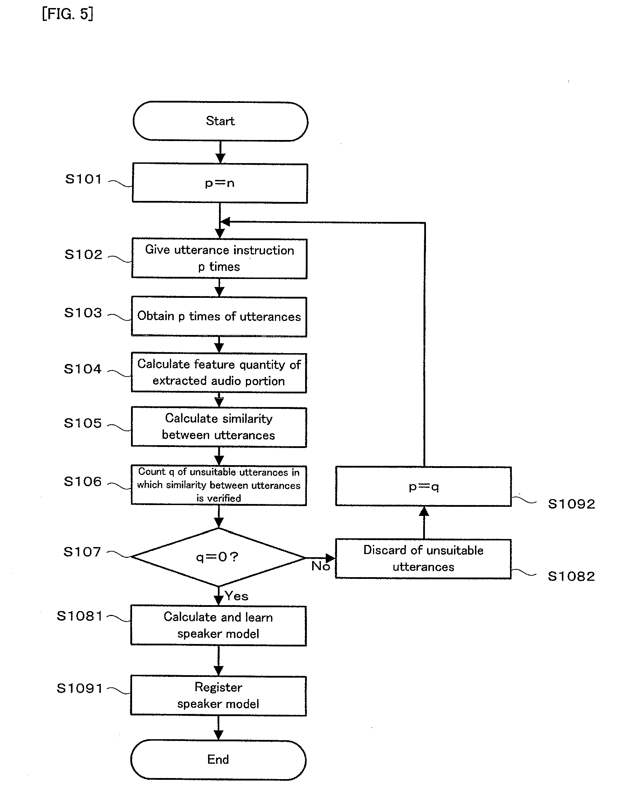

Next, with reference to FIG. 5 in addition to FIG. 2 to FIG. 4, an explanation will be given on the basic operation of a speaker model registering apparatus in a speaker registration system, in a third embodiment. FIG. 5 is a flowchart showing the operation processes of the speaker model registering apparatus in the speaker registration system, in the third embodiment. Incidentally, in the embodiment, the same structure as that of the aforementioned drawings carries the same numerical reference, and the explanation thereof will be omitted as occasion demands.

In FIG. 5, at the start of registration, firstly n is substituted into the number of utterance instructions p (step S101). Then, if an utterance instruction is given p times (step S102), the user utters the keyword p times toward the microphone 132. Then, this p times of utterances are inputted to the speaker model registering apparatus 10 through the microphone 132 (step S103).

Then, each of the utterance audio portions of the p times of utterances inputted is extracted by the audio portion extraction device 142, and the each extracted utterance audio portion is converted to respective one of the feature quantities by the feature quantity calculation device 201 (step S104).

On the basis of the feature quantities related to the p times of utterances, the similarity between the utterances is calculated by the similarity calculation device 15 (refer to FIG. 3) (step S105).

In order that the verification device 16 verifies whether or not the similarity between the utterances calculated reaches the predetermined standards, the number q of the unsuitable utterances which fall short of the predetermined standards is counted (refer to FIG. 4) (step S106).

Then, it is verified whether or not the number q of the unsuitable utterances counted is 0, i.e. whether there is no unsuitable utterance (step S107).

At this time, if the number q of the unsuitable utterances counted is not 0, i.e. if there is the unsuitable utterance (the step S107: No), the q unsuitable utterances are discarded (step S1082). Then q is substituted into q (step S1092), and the utterance instruction is given p times again, i.e. by the discarded amount.

On the other hand, if the number q of the unsuitable utterances counted is 0, i.e. if there is no unsuitable utterance from the beginning or if there is no unsuitable utterance as a result of the repeated utterances (the step S107: Yes), the speaker model calculation device 202 calculates and learns the speaker model on the basis of the utterances which do not include the unsuitable utterance and in which the similarity between the utterances is relatively high (step S1081). Then, the speaker model is registered into the speaker model database 45 by the registering device 40 (step S1091), and the registration of the speaker model for speaker recognition is ended.

As explained with reference to FIG. 5 in addition to FIG. 2 to FIG. 4, according to the speaker recognition system 1 in the embodiment, since it is provided with the speaker model registering apparatus 10 in the embodiment, it is possible to register the speaker model for speaker recognition which is based on the utterances having the relatively high similarity and which is extremely reliable, through the relatively simple process on the apparatus side and the relatively simple operation by the speaker as being the user.

(4) Fourth Embodiment

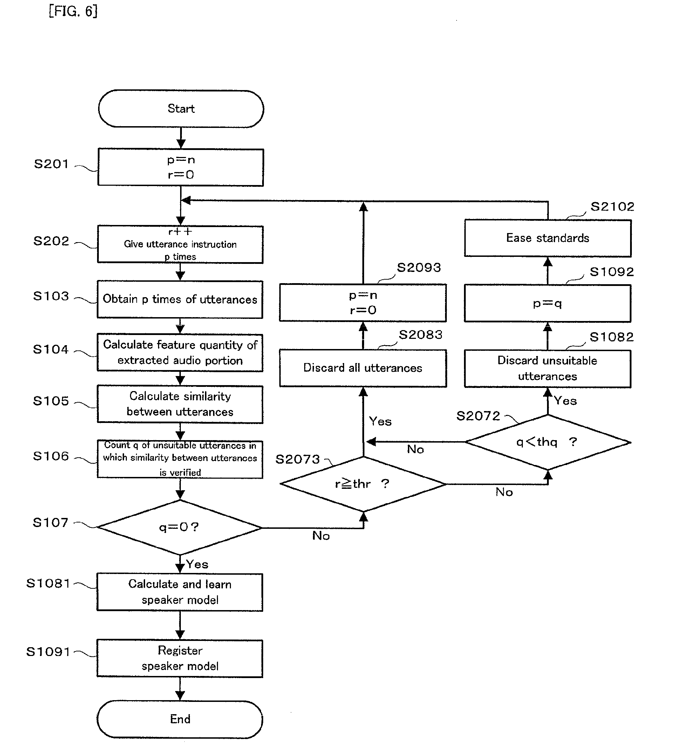

Next, with reference to FIG. 6 in addition to FIG. 2 to FIG. 5, an explanation will be given on the basic operation of a speaker model registering apparatus in a speaker registration system, in a fourth embodiment. FIG. 6 is a flowchart showing the operation processes of the speaker model registering apparatus in the speaker registration system, in the fourth embodiment. Incidentally, in FIG. 6, the same structure as that of the aforementioned drawings carries the same numerical reference, and the explanation thereof will be omitted as occasion demands.

In FIG. 6, at the start of registration, firstly n is substituted into the number of utterance instructions p, and 0 is substituted into the repeated number r of utterances (step S201). Then, when the repeated number r of utterances is counted up to be 1 as the first repeat and the utterance instruction is given p times (step S202), the user utters the keyword p times toward the microphone 132. Then, as in the aforementioned embodiment, the number q of the unsuitable utterances is counted (refer to FIG. 4), and it is verified whether or not the number q of the unsuitable utterances counted is 0, i.e. whether there is no unsuitable utterance (the step S 103 to the step S107).

At this time, if the number q of the unsuitable utterances counted is not 0, i.e. if there is the unsuitable utterance (the step S107: No), then it is judged whether or not the repeated number r of utterances is greater than or equal to a predetermined number of times thr (step 2073).

Here, if the repeated number r of utterances is less than the predetermined number of times thr (the step 2073: No), i.e. if the utterances have not been repeated too much, the unsuitable utterance is possibly relievable by a re-utterance. Then, it is further judged whether or not the number q of the unsuitable utterances is less than a predetermined number of times thq (step S2072).

Here, if the number q of the unsuitable utterances is less than the predetermined number of times thq (the step S2072: Yes), in other words, if the unsuitable utterance disappears shortly, then the q unsuitable utterances are discarded (the step S1082). Then q is substituted into q (the step S1092), and the utterance instruction is given p times again, i.e. by the discarded amount. In addition, considering a possibility of discard due to too strict standards set in advance, a possibility of discard caused by a relatively large scatter in the user's utterances, a possibility of discard of the utterances in which a noise is not mixed because the same noise is mixed in many utterances, or the like, the standards for whether or not to be the unsuitable utterance may be eased in a range in which the reliability of the speaker model is satisfied in practice (step S2102).

On the other hand, if the repeated number r of utterances is greater than or equal to the predetermined number of times thr (the step 2073: Yes), or if the number q of the unsuitable utterances is greater than or equal to the predetermined number of times thq (the step S2072: No), the recovery by further repeat is considered to be difficult, and all the utterances are discarded (step S2083). Then, n is substituted into the number of utterance instructions p, and 0 is substituted into the repeated number r of utterances (step S2093). That is, the utterance registration is reset. As described above, if the repeated number r of utterances or the number q of the unsuitable utterances is too much, it is guessed that there is something wrong except how to utter. For example, the keyword determined by the user is possibly not preferable as the speaker model. Thus, announcement, such as "change the keyword", with the reset can prevent the recurrence of reset.

On the other hand, if the number q of the unsuitable utterances counted is 0, i.e. if there is no unsuitable utterance from the beginning or if there is no unsuitable utterance as a result of the repeated utterances (the step S107: Yes), the speaker model calculation device 202 calculates and learns the speaker model on the basis of the utterances which do not include the unsuitable utterance and in which the similarity between the utterances is relatively high (the step S1081). Then, the speaker model is registered into the speaker model database 45 by the registering device 40 (the step S1091), and the registration of the speaker model for speaker recognition is ended.

As explained with reference to FIG. 6 in addition to FIG. 2 to FIG. 5, according to the speaker recognition system 1 in the embodiment, since it is provided with the speaker model registering apparatus 10 in the embodiment, it is possible to perform the speaker recognition which is extremely reliable, through the relatively simple process on the apparatus side and the relatively simple operation by the speaker as being the user. At this time, in particular, various considerations are given on the repeat of utterances, and it is possible to avoid such a situation, extremely efficiently, that the registration operation is repeated on and on and not ended.

The operation process shown in the aforementioned embodiments may be realized by operating the speaker recognition system on the basis of a speaker model registering method in the speaker registration system 1, wherein the method is provided with an obtaining process, a similarity calculating process, a verifying process, and a speaker model calculating process. Alternatively, it may be realized by making a computer provided for the speaker recognition system 1 read a computer program, wherein the speaker recognition system 1 is provided with an obtaining device, a similarity calculating device, a verifying device, and a speaker model calculating device.

The present invention is not limited to the aforementioned embodiment, but various changes may be made, if desired, without departing from the essence or spirit of the invention which can be read from the claims and the entire specification. A speaker model registering apparatus and method in a speaker recognition system, and a computer program, all of which involve such changes, are also intended to be within the technical scope of the present invention.

Industrial Applicability

The speaker model registering apparatus and method in the speaker recognition system, and the computer program of the present invention can be applied to a speaker model registering apparatus in a speaker recognition system, which is provided for various computer equipment and various electronic electric equipment, such as a car navigation apparatus, a net banking apparatus, an auto-lock apparatus, and a computer's recognizing apparatus, and which performs speaker recognition on the basis of an utterance of a speaker who is a user of the system.

**Claims**

1. A speaker model registering apparatus for registering a speaker model for speaker recognition in a speaker recognition system, said speaker model registering apparatus comprising:

   an obtaining device for obtaining n utterances (wherein n is an integral of 2 or more);
   a similarity calculating device for calculating similarity which indicates how similar the obtained n utterances are each other;
   a verifying device for verifying whether or not there is an unsuitable utterance in which the similarity falls short of predetermined standards, of the n utterances;
   a speaker model calculating device for calculating a speaker model on the basis of the n utterances which does not include the unsuitable utterance if there is no unsuitable utterance as a result of the verification; and
   a registering device for registering the calculated speaker model as the speaker model for speaker recognition.

2. The speaker model registering apparatus according to claim 1, further comprising a controlling device for controlling said obtaining device, said similarity calculating device, and said verifying device to repeat the obtainment of a new utterance as an alternative utterance to the unsuitable utterance, the calculation of the similarity among n utterances including the obtained new utterance, and the verification until the unsuitable utterance disappears, if there is the unsuitable utterance as a result of the verification.

3. The speaker model registering apparatus according to claim 2, wherein said verifying device changes the predetermined standards to a side where the unsuitable utterance hardly appears, every time the verification is repeated in accordance with appearance of the unsuitable utterance.

4. The speaker model registering apparatus according to claim 2, wherein said controlling device treats all the n utterances, which are targets of the verification at a current time point, as the unsuitable utterance, regardless of the similarity, if the number of appearances of the unsuitable utterance exceeds a predetermined threshold value while the verification is repeated.

5. The speaker model registering apparatus according to claim 2, wherein said controlling device treats all the n utterances, which are targets of the verification at a current time point, as the unsuitable utterance, regardless of the similarity, if a ratio of appearances of the unsuitable utterance exceeds a predetermined threshold value.

6. The speaker model registering apparatus according to claim 1, further comprising a requesting device for requesting the obtainment of the utterances by said obtaining device, if there is the unsuitable utterance as a result of the verification.

7. A speaker recognition system comprising:

   the speaker model registering apparatus according to claim 1; and
   a recognizing device for recognizing the utterances by an arbitrary speaker, on the basis of the registered speaker model.

8. A speaker model registering method of registering a speaker model for speaker recognition in a speaker recognition system, said speaker model registering method comprising:

   an obtaining process of obtaining n utterances (wherein n is an integral of 2 or more);

a similarity calculating process of calculating similarity which indicates how similar the obtained n utterances are each other;

a verifying process of verifying whether or not there is an unsuitable utterance in which the similarity falls short of predetermined standards, of the n utterances;

a speaker model calculating process of calculating a speaker model on the basis of the n utterances which does not include the unsuitable utterance if there is no unsuitable utterance as a result of the verification; and

a registering process of registering the calculated speaker model as the speaker model for speaker recognition.

9. A computer program making a computer, which is provided for a speaker model registering apparatus for registering a speaker model for speaker recognition in a speaker recognition system, as:

an obtaining device for obtaining n utterances (wherein n is an integral of 2 or more);

a similarity calculating device for calculating similarity which indicates how similar the obtained n utterances are each other;

a verifying device for verifying whether or not there is an unsuitable utterance in which the similarity falls short of predetermined standards, of the n utterances;

a speaker model calculating device for calculating a speaker model on the basis of the n utterances which does not include the unsuitable utterance if there is no unsuitable utterance as a result of the verification; and

a registering device for registering the calculated speaker model as the speaker model for speaker recognition.

[FIG. 1]

[FIG. 2]

[FIG. 3]

| utterrance | 1 | 2 | · · · | m | · · · | n |
|---|---|---|---|---|---|---|
| 1 | 1.0 | 0.9 | | 0.1 | | 0.9 |
| 2 | 0.9 | 1.0 | | 0.2 | | 0.8 |
| · · | | | | | | |
| m | 0.1 | 0.2 | | 1.0 | | 0.1 |
| · · | | | | | | |
| n | 0.9 | 0.8 | | 0.1 | | 1.0 |

[FIG. 4]

| utterrance | 1 | 2 | · · · | m | · · · | n | |
|---|---|---|---|---|---|---|---|
| 1 | ○ | ○ | | × | | ○ | $n-1$ |
| 2 | ○ | ○ | | × | | ○ | $n-1$ |
| · · | · · | · · | | · · | | · · | · · |
| m | × | × | | ○ | | × | 1 |
| · · | · · | · · | | · · | | · · | · · |
| n | ○ | ○ | | × | | ○ | $n-1$ |

[FIG. 5]

```
                    ┌─────────────────┐
                    │      Start       │
                    └────────┬─────────┘
                             │
   S101 ~    ┌───────────────▼───────────────┐
             │            p＝n                 │
             └───────────────┬───────────────┘
                             │
                             │◄──────────────────────────────┐
   S102 ~    ┌───────────────▼───────────────┐               │
             │   Give utterance instruction   │               │
             │           p times              │               │
             └───────────────┬───────────────┘               │
                             │                                │
   S103 ~    ┌───────────────▼───────────────┐               │
             │   Obtain p times of utterances │               │
             └───────────────┬───────────────┘               │
                             │                                │
   S104 ~    ┌───────────────▼───────────────┐               │
             │  Calculate feature quantity of │               │
             │     extracted audio portion    │               │
             └───────────────┬───────────────┘               │
                             │                                │
   S105 ~    ┌───────────────▼───────────────┐               │
             │    Calculate similarity        │               │
             │     between utterances         │               │
             └───────────────┬───────────────┘               │
                             │                                │
   S106 ~  ┌─────────────────▼─────────────────┐   ┌──────────────────────┐
           │ Count q of unsuitable utterances in │   │        p＝q          │  ~ S1092
           │ which similarity between utterances │   └──────────▲───────────┘
           │           is verified               │              │
           └─────────────────┬─────────────────┘              │
                             │                                 │
   S107 ~         ◇──────────▼──────────◇      No   ┌──────────────────────┐
                 ◇        q＝0 ?          ◇─────────►│ Discard of unsuitable │
                  ◇────────┬─────────────◇          │      utterances       │  ~ S1082
                           │ Yes                    └──────────────────────┘
   S1081 ~  ┌──────────────▼────────────────┐
             │   Calculate and learn          │
             │      speaker model             │
             └──────────────┬────────────────┘
                            │
   S1091 ~  ┌───────────────▼───────────────┐
             │        Register               │
             │      speaker model            │
             └───────────────┬───────────────┘
                             │
                    ┌────────▼─────────┐
                    │       End        │
                    └──────────────────┘
```

[FIG. 6]

```
                    ┌─────────────┐
                    │    Start    │
                    └──────┬──────┘
                           │
                    ┌──────▼──────┐
        S201 ───────│    p=n      │
                    │    r=0      │
                    └──────┬──────┘
                           │
                    ┌──────▼──────────────┐              ┌─────────────────────┐  S2102
        S202 ───────│      r++            │              │    Ease standards   │
                    │ Give utterance      │              └─────────▲───────────┘
                    │ instruction p times │                        │
                    └──────┬──────────────┘           S2093        │  S1092
                           │              ┌─────────────┐ ┌────────┴──────────┐
        S103 ───────┌──────▼──────────────┐│    p=n     │ │      p=q          │
                    │ Obtain p times of   ││    r=0     │ └────────▲──────────┘
                    │ utterances          │└──────▲──────┘   S2083 │  S1082
                    └──────┬──────────────┘       │      ┌─────────┴──────────┐
        S104 ───────┌──────▼──────────────┐       │      │ Discard unsuitable │
                    │ Calculate feature   │       │      │    utterances      │
                    │ quantity of         │  S2083 │      └─────────▲──────────┘
                    │ extracted audio     │┌───────┴─────┐          │ Yes
                    │ portion             ││ Discard all │   S2072  │
                    └──────┬──────────────┘│ utterances  │  ◇ q<thq ? ◇
        S105 ───────┌──────▼──────────────┐└──────▲──────┘
                    │ Calculate similarity│       │ Yes
                    │ between utterances  │       │
                    └──────┬──────────────┘       │
        S106 ───────┌──────▼──────────────┐  S2073│
                    │ Count q of unsuitable│  ◇ r≧thr ? ◇
                    │ utterances ...       │
                    └──────┬──────────────┘
                           │
        S107 ───────  ◇ q=0 ? ◇ ──No──►
                           │ Yes
                    ┌──────▼──────────────┐
        S1081 ──────│ Calculate and learn │
                    │ speaker model       │
                    └──────┬──────────────┘
        S1091 ──────┌──────▼──────────────┐
                    │ Register            │
                    │ speaker model       │
                    └──────┬──────────────┘
                    ┌──────▼──────┐
                    │     End     │
                    └─────────────┘
```

S2102 — Ease standards

S2093 — p=n, r=0

S1092 — p=q

S2083 — Discard all utterances

S1082 — Discard unsuitable utterances

S2072 — q<thq ?  Yes / No

S2073 — r≧thr ?  Yes / No

S107 — q=0 ?  Yes / No

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004294755 A